# EUROPÄISCHE PATENTANMELDUNG

(11) **EP 4 792 632 A1**
(43) Veröffentlichungstag der Anmeldung: **19.08.2026**
(21) Anmeldenummer: 26152010.0
(22) Anmeldetag: 15.01.2026
(51) Int. Cl.: A01B 71/02, A01B 69/04

(54) **ANORDNUNG ZUR EINSTELLUNG VON BETRIEBSPARAMETERN EINER AUTONOMEN ARBEITSMASCHINE**

(30) Priorität: 18.02.2025 DE 102025105993
(71) Anmelder: CLAAS Tractor S.A.S., 78141 Vélizy-Villacoublay Cedex (FR)
(72) Erfinder: Monkenbusch, Robin, 33378 Rheda-Wiedenbrück (DE); Niggemeyer, Tobias, 33098 Paderborn (DE); Rusterholtz, Thiebaud, 91470 LIMOURS (FR)
(74) Vertreter: CLAAS Gruppe

(57) **Zusammenfassung**

Die vorliegende Erfindung betrifft eine Anordnung zur Einstellung von Betriebsparametern einer autonomen Arbeitsmaschine (7), umfassend:
eine Benutzerschnittstelle (2), die mit einem entfernten Planungssystem (1) zum Datenaustausch verbunden oder verbindbar ist, welches eine Grundkonfiguration (6) mit für den Einsatz der autonomen Arbeitsmaschine (7) erforderlichen Betriebsparametern bereitstellt und übermittelt,
eine der autonomen Arbeitsmaschine (7) zugeordnete Steuereinheit (20), welche die von dem Planungssystem (1) bereitgestellten Betriebsparameter der Grundkonfiguration (6) zur Ansteuerung der autonomen Arbeitsmaschine (7) und/oder zumindest eines daran adaptierten Anbaugerätes (8) verwendet,
wobei durch die Benutzerschnittstelle (2) zumindest eine die Grundkonfiguration (6) erweiternde Einzelfunktion (10) und/oder zumindest ein die Grundkonfiguration (6) erweiterndes Konfigurationspaket (11, 12) von dem Planungssystem (1) abrufbar ist bzw. sind, wobei eine Nutzungsdauer (t_{N}) der zumindest einen die Grundkonfiguration (6) erweiternden Einzelfunktion (10) und/oder des zumindest einen erweiternden Konfigurationspaketes (11, 12) durch eine vom Planungssystem (1) vorgegebene Zeitdauer (tₐ) zeitlich begrenzt ist und/oder durch eine mittels der Benutzerschnittstelle (2) spezifizierbare Zeitdauer (tₘ) begrenzbar ist.

## Beschreibung

Die vorliegende Erfindung betrifft eine Anordnung zur Einstellung von Betriebsparametern einer autonomen Arbeitsmaschine sowie ein Verfahren zur Einstellung von Betriebsparametern einer autonomen Arbeitsmaschine.

Aus der EP 3 216 659 B1 ist eine Anordnung zur Kontrolle des Freischaltens von Funktionen einer bemannten Arbeitsmaschine bekannt. Zu den freischaltbar Funktionen zählen unter anderem eine automatisierte Lenkung, Synchronisierung von Position und Weg mehrerer landwirtschaftlicher Maschinen, Zugriff auf Dokumentation, positionsbasierte Betätigung von Funktionen der Arbeitsmaschine und/oder eines Anbaugerätes am Vorgewende und dergleichen. Hierbei werden die Funktionen erst durch die Identifikation eines Benutzers freigeschaltet. In einer Datenbank sind Benutzerdaten sowie dem Benutzer zugeordnete Berechtigungen bzw. Funktionen hinterlegt, die erst nach der Identifikation freigeschaltet werden. Für die Nutzung der Funktionen werden Kosten erhoben, die in Abhängigkeit von der ausgewählten Funktion und Dauer protokolliert und abgerechnet werden.

Aus der DE 10 2022 110 132 A1 ist ein auf Datenaustausch basierendes Assistenzsystem bekannt, welches ein für den Einsatz auf einer landwirtschaftlichen Fläche geeignetes autonomes Fahrzeugs, das als landwirtschaftliche Arbeitsmaschine agiert, konfiguriert und den Einsatz plant sowie dem Fahrzeug die für den Einsatz erforderlichen Daten übermittelt, das Fahrzeug steuert und den Arbeitsbetrieb überwacht. Hierzu wird ein manuell erstellter kundenspezifischer Einsatzplan an das Assistenzsystem übertragen, welcher eine durch das autonome Fahrzeug zu erbringende Dienstleitung nach Art und Umfang beschreibt.

Ausgehend vom vorstehend genannten Stand der Technik liegt der Erfindung die Aufgabe zugrunde, eine Anordnung zur Einstellung von Betriebsparametern einer autonomen Arbeitsmaschine bereitzustellen, durch welche ein flexibel, an Wünsche eines Nutzers der autonomen Arbeitsmaschine und/oder an bestehende Rahmenbedingungen auf einem durch die autonome Arbeitsmaschine zu bearbeitenden Feld oder auszuführenden landwirtschaftlichen Arbeitsauftrages anpassbarer Funktionsumfang einstellbar ist.

Die vorliegende Aufgabe wird durch eine Anordnung mit den Merkmalen des Anspruches 1 gelöst. Weiterhin wird die Aufgabe durch ein Verfahren mit den Merkmalen des nebengeordneten Anspruchs 14 gelöst. Vorteilhafte Weiterbildungen sind Gegenstand der abhängigen Ansprüche.

Gemäß dem Anspruch 1 wird eine Anordnung zur Einstellung von Betriebsparametern einer autonomen Arbeitsmaschine vorgeschlagen. Die Anordnung umfasst eine Benutzerschnittstelle, die mit einem entfernten Planungssystem zum Datenaustausch verbunden oder verbindbar ist, welches eine Grundkonfiguration mit für den Einsatz der autonomen Arbeitsmaschine erforderlichen Betriebsparametern bereitstellt und übermittelt. Weiter umfasst die Anordnung eine der autonomen Arbeitsmaschine zugeordnete Steuereinheit, welche die von dem Planungssystem bereitgestellten Betriebsparameter der Grundkonfiguration zur Ansteuerung der autonomen Arbeitsmaschine und/oder zumindest eines daran adaptierten Anbaugerätes verwendet, wobei durch die Benutzerschnittstelle zumindest eine die Grundkonfiguration erweiternde Einzelfunktion und/oder zumindest ein die Grundkonfiguration erweiterndes Konfigurationspaket von dem Planungssystem abrufbar ist bzw. sind. Eine Nutzungsdauer der zumindest einen die Grundkonfiguration erweiternden Einzelfunktion und/oder des zumindest einen erweiternden Konfigurationspaketes ist durch eine vom Planungssystem vorgegebene Zeitdauer zeitlich begrenzt und/oder ist durch eine mittels der Benutzerschnittstelle spezifizierbare Zeitdauer begrenzbar.

Eine vom Planungssystem, insbesondere automatisch, vorgegebene Zeitdauer kann definierte Zeitintervalle unterschiedlicher Länge, beispielsweise Stunden, Tage oder dergleichen, umfassen oder eine tatsächliche Nutzungsdauer zeitlich erfassen. Eine zeitliche Erfassung der tatsächlichen Nutzungsdauer kann dabei durch den Zeitpunkt des Abrufes der zumindest einen erweiternden Einzelfunktion und/oder des zumindest einen die Grundkonfiguration erweiternden Konfigurationspaketes und das Feststellen der Beendigung der Nutzung bestimmt werden. Letzteres kann dabei automatisch durch die autonome Arbeitsmaschine festgestellt werden oder durch eine manuelle Eingabe seitens des Nutzers mittels der Benutzerschnittstelle erfolgen. Bevorzugt kann die vorgegebene Zeitdauer mittels der Benutzerschnittstelle ausgewählt werden.

Dem Nutzer wird durch die erfindungsgemäße Anordnung die Möglichkeit eröffnet, mit geringem Aufwand die gemäß der Grundkonfiguration arbeitende autonome Arbeitsmaschine zumindest temporär um zusätzliche Funktionen zu erweitern, die der Nutzer für die Bearbeitung eines Feldes oder die Ausführung eines sonstigen landwirtschaftlichen Arbeitsauftrages für notwendig und sinnvoll erachtet.

Insbesondere kann das Planungssystem dazu eingerichtet sein, in Abhängigkeit von einer Analyse sensorisch erfasster, durch die autonome Arbeitsmaschine übermittelter Betriebsdaten und/oder von einer externen Datenquelle abgerufener Umweltdaten und/oder abgerufener historischer Feld- und Ertragsdaten, die in einer Datenbank des Planungssystems hinterlegt sind, eine Empfehlung für zumindest eine die Grundkonfiguration erweiternde Einzelfunktion oder zumindest ein erweiterndes Konfigurationspaket an die Benutzerschnittstelle zur Auswahl durch einen Nutzer zu übertragen.

Bevorzugt kann zumindest eines der die Grundfunktion erweiternden Konfigurationspakete eine Teilmenge aller von der autonomen Arbeitsmaschine und/oder dem daran adaptierten Anbaugerät ausführbaren Funktionen umfassen, die der Grundkonfiguration hinzufügbar sind, und zumindest eines der Konfigurationspakete alle von der autonomen Arbeitsmaschine und/oder dem daran adaptierten Anbaugerät ausführbaren Funktionen umfasst. Hierdurch ist ein abgestufter Nutzungsumfang darstellbar, welchen der Nutzer durch Auswahl frei bestimmen kann.

Alternativ oder zusätzlich kann eine Einzelfunktion die Bereitstellung und Übertragung einer Applikationskarte, das automatische Generieren von Geofence- Datensätzen des zu bearbeitenden Feldes, das automatische Generieren von Fahrtrouten, das Bereitstellen von Korrektursignalen eines Positionsortungssystems, das Bereitstellen von spezifischen Betriebsparametern für den Einsatz breiter Anbaugeräte, die Freischaltung von Antriebsleistung der autonomen Arbeitsmaschine durch eine Anpassung der Antriebssteuerungssoftware, das manuelle Auslösen des Anfahrens eines Servicepunktes umfassen.

Gemäß einer Weiterbildung kann das zumindest eine die Grundkonfiguration erweiternde Konfigurationspaket mehrere Einzelfunktionen bündeln. Dabei kann das zumindest eine die Grundkonfiguration erweiternde Konfigurationspaket eine vorkonfektionierte Auswahl an Einzelfunktionen als Bündel umfassen. Es können bevorzugt mehrere erweiternde Konfigurationspakete abrufbar sein, die sich durch unterschiedliche Anwendungsfälle und/oder durch eine an spezifische Betriebssituationen angepasste Kombinationen von Einzelfunktionen unterscheiden können.

Bevorzugt können mittels der Benutzerschnittstelle zumindest zwei Einzelfunktionen aus einer vorgegebenen Auswahl von Einzelfunktionen zu dem die Grundkonfiguration erweiternden Konfigurationspaket kombinierbar sind. Der Nutzer kann aus einer vorgegebenen Auswahl von Einzelfunktionen, welche die autonome Arbeitsmaschine ausführen kann, individuell auswählen, um diese als die Grundkonfiguration erweiterndes individuelles Konfigurationspaket abzuspeichern. Insbesondere kann dieses individuelle Konfigurationspaket im Planungssystem hinterlegbar sein, um es bei Bedarf erneut abrufen zu können.

Alternativ oder zusätzlich kann das zumindest eine die Grundkonfiguration erweiternde Konfigurationspaket die Optimierung von zumindest einer der in dem erweiternden Konfigurationspaket enthaltenen Einzelfunktionen und zugehörigen Betriebsparametern basierend auf historischen Planungsdaten und/oder aktuell von der autonomen Arbeitsmaschine sensorisch erfassten Betriebs- und/oder Umgebungsdaten durch das Planungssystem umfassen.

Insbesondere können die zumindest eine die Grundkonfiguration erweiternde Einzelfunktion und/oder das zumindest eine die Grundkonfiguration erweiternde Konfigurationspaket, die durch die Benutzerschnittstelle abrufbar sind, im laufenden Betrieb der autonomen Arbeitsmaschine abrufbar sein.

Bevorzugt kann das Planungssystem mit einer Rechtevergabedatenbank verbunden sein, aus welcher Berechtigungsinformationen abrufbar sind. In der Rechtevergabedatenbank können unter anderem Informationen zum Nutzer, zu Abrechnungsmodalitäten, zu vom Nutzer eingesetzten Arbeitsmaschinen und/oder Anbaugeräten sowie zu Berechtigungen des Nutzers hinterlegt sein, die eine Authentifizierung und nutzerindividuelle Zuordnung der durch das Planungssystem bereitgestellten Leistungen ermöglichen.

Gemäß einer Weiterbildung kann das alle von der autonomen Arbeitsmaschine und/oder dem daran adaptierten Anbaugerät ausführbaren Funktionen umfassende erweiternde Konfigurationspaket eine durch das Planungssystem freizugebende Editierfunktion umfassen, welche das Editieren von einem oder mehreren Prozessschritten eines auszuführenden Arbeitsprozesses mittels der Benutzerschnittstelle ermöglicht.

Dabei kann das Planungssystem mit der Rechtevergabedatenbank verbunden sein, aus welcher Berechtigungsinformationen abrufbar sind, welchen Umfang die freizugebende Editierfunktion hat.

Weiterhin kann die freizugebende Editierfunktion auf die zumindest eine die Grundkonfiguration erweiternde Einzelfunktion und/oder das zumindest eine die Grundkonfiguration erweiternde Konfigurationspaket beschränkt sein.

Insbesondere kann das zumindest eine die Grundkonfiguration erweiternde Konfigurationspaket eine Routine zur Ansteuerung des Planungssystems umfassen, um für die zumindest eine autonome Arbeitsmaschine im Bereich der Fahrtroute eine Position für zumindest einen Servicepunkt automatisch vorzubestimmen, wobei das Planungssystem dazu eingerichtet ist, auf Basis von in einer Speichereinheit des Planungssystems hinterlegten oder hinterlegbaren topographischen Daten Bereiche des Feldes und/oder an das Feld angrenzende Bereiche zu identifizieren, die für das Vorsehen des zumindest einen Servicepunktes zugänglich sind.

Die eingangs gestellte Aufgabe wird weiterhin durch ein Verfahren zur Einstellung von Betriebsparametern einer autonomen Arbeitsmaschine gemäß dem nebengeordneten Anspruch 14 gelöst.

Gemäß dem Anspruch 14 wird ein Verfahren zur Einstellung von Betriebsparametern einer autonomen Arbeitsmaschine vorgeschlagen, umfassend die Verfahrensschritte:
- Verbinden einer Benutzerschnittstelle mit einem entfernten Planungssystem zum Datenaustausch,
- Bereitstellen einer Grundkonfiguration mit für den Einsatz der autonomen Arbeitsmaschine erforderlichen Betriebsparametern durch das Planungssystem und Übermitteln der Grundkonfiguration an eine der autonomen Arbeitsmaschine zugeordnete Steuereinheit,
- Verwenden der von dem Planungssystem bereitgestellten Betriebsparameter der Grundkonfiguration durch die Steuereinheit zur Ansteuerung der autonomen Arbeitsmaschine und/oder zumindest eines daran adaptierten Anbaugerätes,
- Bereitstellen zumindest einer die Grundkonfiguration erweiternde Einzelfunktion und/oder zumindest eines die Grundkonfiguration erweiternden Konfigurationspaketes durch das Planungssystem, welche oder welches durch die Benutzerschnittstelle abrufbar ist bzw. sind,
- Begrenzen einer zeitlichen Nutzungsdauer der zumindest einen die Grundkonfiguration erweiternden Einzelfunktion und/oder des zumindest einen erweiternden Konfigurationspaketes durch eine vom Planungssystem vorgegebene Zeitdauer und/oder durch eine mittels der Benutzerschnittstelle spezifizierbare Nutzungsdauer.

Auf die erfindungsgemäßen Ausführungen zur Anordnung zur Einstellung von Betriebsparametern einer autonomen Arbeitsmaschine darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung einer Anordnung zur Einstellung von Betriebsparametern einer autonomen Arbeitsmaschine;
- Fig. 2: schematisch und exemplarisch eine Darstellung einer von einer Benutzerschnittstelle visualisierten Anzeige zur Auswahl eines Servicepunktes.

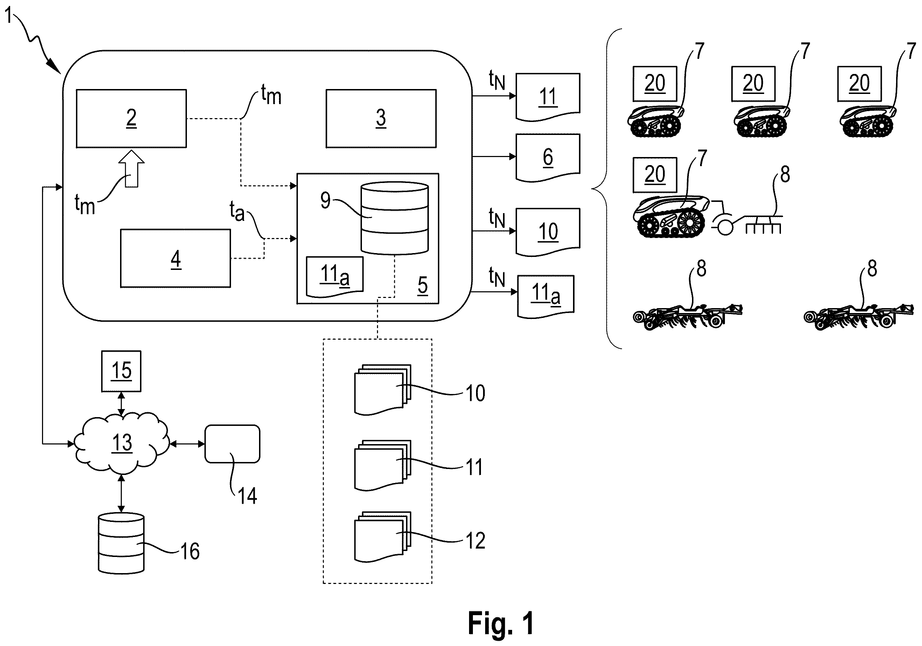

In Fig. 1 ist schematisch und exemplarisch eine Darstellung einer Anordnung zur Einstellung von Betriebsparametern zumindest einer autonomen landwirtschaftlichen Arbeitsmaschine 7 gezeigt. An die autonome Arbeitsmaschine 7 ist zumindest ein Anbaugerät 8 adaptierbar, welches in Abhängigkeit vom durchzuführenden landwirtschaftlichen Arbeitsprozess variiert.

Eine Benutzerschnittstelle 2 ist mit einem entfernten Planungssystem 1 zum Datenaustausch verbunden oder verbindbar. Die Benutzerschnittstelle 2 kann dabei kabelgebunden oder kabellos mit dem entfernten Planungssystem 1 kommunizieren. Das Planungssystem 1 stellt eine Grundkonfiguration 6 mit für den Einsatz der autonomen Arbeitsmaschine 7 erforderlichen Betriebsparametern bereit und übermittelt diese an die autonome Arbeitsmaschine 7. Die autonome Arbeitsmaschine 7 weist eine ihr zugeordnete Steuereinheit 20 auf, welche die von dem Planungssystem 1 bereitgestellten Betriebsparameter der Grundkonfiguration 6 zur Ansteuerung der autonomen Arbeitsmaschine 1 und/oder des zumindest einen daran adaptierten Anbaugerätes 8 verwendet.

Die Grundkonfiguration 6 und die davon umfassten Betriebsparameter berücksichtigen die Art des durchzuführenden landwirtschaftlichen Arbeitsprozesses sowie das dafür notwendige Anbaugerät 8. Mittels der Benutzerschnittstelle 2 sind Informationen zur autonomen Arbeitsmaschine 7 und/oder dem zumindest einen Anbaugerät 8 dem Planungssystem 1 vorgebbar.

Das Planungssystem 1 umfasst neben der Benutzerschnittstelle 2, eine Kommunikationseinheit 3, eine Recheneinheit 4 und eine Speichereinheit 5. Das Planungssystem 1 ist dazu eingerichtet, die Grundkonfiguration 6 mittels der Kommunikationseinheit 3 an die für die Durchführung des Arbeitsprozesses eingerichtete autonome Arbeitsmaschine 7 zur Steuerung, Regelung und/oder Parametrisierung der autonomen Arbeitsmaschine 7 und des zumindest einen adaptierten Anbaugerätes 8 zu übertragen.

Mittels der Benutzerschnittstelle 2 ist die Grundkonfiguration 6 erweiternde Einzelfunktion 10 und/oder zumindest ein die Grundkonfiguration 6 erweiterndes Konfigurationspaket 11 von dem Planungssystem 1 abrufbar. Die zumindest eine Einzelkonfiguration 10 sowie das zumindest eine Konfigurationspaket 11 sind aus einer in der Speichereinheit 5 hinterlegten Datenbank 9 abrufbar.

Eine Nutzungsdauer t_{N} der zumindest einen die Grundkonfiguration 6 erweiternden Einzelfunktion 10 und/oder des zumindest einen die Grundkonfiguration 6 erweiternden Konfigurationspaketes 11 ist durch eine vom Planungssystem 1 automatisch vorgegebene Zeitdauer tₐ zeitlich begrenzt und/oder durch eine mittels der Benutzerschnittstelle 2 spezifizierbare Zeitdauer tₘ begrenzbar.

Der Zugriff auf die Benutzerschnittstelle 2 des Planungssystems 1 kann vorzugsweise webbasierend, insbesondere durch eine mittels Internetbrowser ausführbare Webseite 14, erfolgen, sodass ein berechtigungsabhängiger Zugriff auf das Planungssystem 1 über ein Netzwerk 13 erfolgen kann.

Das Planungssystem 1 ist dazu eingerichtet, in Abhängigkeit von einer Analyse sensorisch erfasster, durch die autonome Arbeitsmaschine 7 übermittelter Betriebsdaten und/oder von einer externen Datenquelle 15 abgerufener Umweltdaten und/oder abgerufener historischen Feld- und Ertragsdaten, die in der Datenbank 9 des Planungssystems 1 hinterlegt sind, eine Empfehlung für zumindest eine die Grundkonfiguration 6 erweiternde Einzelfunktion 10 oder zumindest ein erweiterndes Konfigurationspaket 11, 12 an die Benutzerschnittstelle 2 zur Auswahl durch einen Nutzer des Planungssystems 1 zu übertragen. Dem Nutzer können somit basierend auf Erfahrungswerten, die bereits in der Datenbank 9 und/oder der externen Datenquelle 15 hinterlegt sind, Empfehlungen übermittelt werden, um die Nutzung der autonomen Arbeitsmaschine 7 und des daran adaptierten Anbaugerätes 8 durch den Abruf bzw. das Freischalten und die dadurch ermöglichte Nutzung zumindest einer zusätzlichen Einzelfunktion 10 oder zumindest eines erweiternden Konfigurationspaketes 11, 12 zu optimieren.

Die externe Datenquelle 15 kann eine Datenbank eines Dritten, beispielsweise eines Herstellers der autonomen Arbeitsmaschine 7 und/oder des Anbaugerätes 8, und/oder ein Farmmanagementsystem sein.

Dabei kann ein die Grundfunktion 6 erweiterndes Konfigurationspaket 11 eine Teilmenge aller von der autonomen Arbeitsmaschine 7 und/oder dem daran adaptierten Anbaugerät 8 ausführbaren Funktionen umfasst, die der Grundkonfiguration 6 hinzufügbar sind. Es können somit mehrere erweiternde Konfigurationspakete 11, 12 in der Datenbank 9 abrufbar hinterlegt sein, welche jeweils unterschiedliche Teilmengen aller von der autonomen Arbeitsmaschine 7 und/oder dem daran adaptierten Anbaugerät 8 ausführbaren Funktionen umfassen. Dabei können die erweiternden Konfigurationspakete 11 in Teilen Schnittmengen der ausführbaren Funktionen aufweisen.

Ein weiteres Konfigurationspaket 12 kann alle von der autonomen Arbeitsmaschine 7 und/oder dem daran adaptierten Anbaugerät 8 ausführbaren Funktionen umfassen.

Sowohl die Grundfunktion 6 als auch die zumindest eine Einzelfunktion 10 oder das zumindest eine erweiternde Konfigurationspaket 11, 12 sind für die jeweilige Arbeitsmaschine 7 und das zumindest eine daran adaptierten Anbaugerät 8 spezifisch. Spezifisch heißt dabei, dass neben der Art des Arbeitsprozesses zumindest eine Herstellerabhängigkeit hinsichtlich der Ausführung und Ansteuerung von Arbeitsmaschine 7 und/oder Anbaugerät 8 besteht.

Eine Einzelfunktion 10 kann unter anderem die Bereitstellung und Übertragung einer Applikationskarte, das automatische Generieren von Geofence- Datensätzen für ein zu bearbeitendes Feld 17, das automatische Generieren von Fahrtrouten, das Bereitstellen von Korrektursignalen eines Positionsortungssystems, das Bereitstellen von spezifischen Betriebsparametern für den Einsatz breiter Anbaugeräte 8, die Freischaltung von Antriebsleistung der autonomen Arbeitsmaschine 7 durch eine Anpassung der Antriebssteuerungssoftware, das manuelle Auslösen des Anfahrens eines Servicepunktes 19 umfassen.

Das zumindest eine die Grundkonfiguration 6 erweiternde Konfigurationspaket 11 kann mehrere Einzelfunktionen bündeln. Dabei kann das zumindest eine die Grundkonfiguration 6 erweiternde Konfigurationspaket 11 eine vorkonfektionierte Auswahl an Einzelfunktionen 10 umfassen. Es können bevorzugt mehrere erweiternde Konfigurationspakete 11 abrufbar sein, die sich durch unterschiedliche Anwendungsfälle und/oder durch eine an spezifische Betriebssituationen angepasste Kombinationen von Einzelfunktionen 10 unterscheiden können. Beispielhaft für eine angepasste Kombination von Einzelfunktionen 10 sei die abweichende Verwendung eines größeren Vorsatzgerätes als Anbaugerät 8 und damit einhergehend ein erhöhter Bedarf an bereitgestellter Antriebsleistung genannt, welche durch die Kombination korrespondierender Einzelfunktionen 10 selektiv freischaltbar ist.

Mittels der Benutzerschnittstelle 2 können zumindest zwei Einzelfunktionen 10 aus einer vorgegebenen Auswahl von Einzelfunktionen 10 zu dem die Grundkonfiguration 6 erweiternden Konfigurationspaket 11 kombinierbar sein. Der Nutzer kann aus einer vorgegebenen Auswahl von Einzelfunktionen 10, welche die autonome Arbeitsmaschine 7 und/oder das zumindest eine daran adaptierte Anbaugerät 8 ausführen kann, individuell auswählen. Diese Kombination eines die Grundkonfiguration 6 erweiternden individuellen Konfigurationspaketes 11a kann der Nutzer abspeichern. Insbesondere kann dieses individuelle Konfigurationspaket 11a im Planungssystem 1 in der Speichereinheit 5 hinterlegbar sein, um es bei Bedarf erneut abrufen zu können.

Das Planungssystem 1 ist mit einer Rechtevergabedatenbank 16 verbunden, aus welcher Berechtigungsinformationen abrufbar sind. Durch einen Abgleich von in der Rechtevergabedatenbank 16 hinterlegten Benutzerdaten kann sich der Nutzer des Planungssystems authentifizieren, um Zugang und Zugriff auf die Einzelfunktionen 10 und die Grundkonfiguration 6 erweiternden Konfigurationspakete 11,12 zu erhalten.

Das zumindest eine die Grundkonfiguration 6 erweiternde Konfigurationspaket 11,12 umfasst die Optimierung von zumindest einer der in dem erweiternden Konfigurationspaket 11, 12 enthaltenen Einzelfunktionen 10 und den zugehörigen Betriebsparametern basierend auf historischen Planungsdaten und/oder aktuell von der autonomen Arbeitsmaschine 7 und/oder dem zumindest einen daran adaptierten Anbaugerät 8 sensorisch erfassten Betriebs- und/oder Umgebungsdaten durch das Planungssystem 1.

Die zumindest eine die Grundkonfiguration 6 erweiternde Einzelfunktion 10 und/oder das zumindest eine die Grundkonfiguration 6 erweiternde Konfigurationspaket 11, 12, welche durch die Benutzerschnittstelle 2 abrufbar sind, ist im laufenden Betrieb der autonomen Arbeitsmaschine 7 abrufbar sind. Dies erhöht die Flexibilität der autonomen Arbeitsmaschine 7. Es kann dadurch auf äußere Umstände reagiert werden, die während der Durchführung des Arbeitsprozesses auftreten können. Beispielhaft kann während der Durchführung des Arbeitsprozesses ein erhöhter Leistungsbedarf auftreten, der durch eine Änderung von Steuerbefehlen für die Antriebsmotorsteuerung bereitgestellt wird. Hierzu kann der Nutzer die korrespondierende Einzelfunktion 10 abrufen und die Nutzungsdauer t_{N} manuell vorgeben. Andere Konstellationen, die einen Abruf und Freischaltung von Einzelfunktionen 10 oder erweiternden Konfigurationspaketen 11, 12 erforderlich werden lassen können, sind dankbar.

Das alle von der autonomen Arbeitsmaschine 7 und/oder dem daran adaptierten Anbaugerät 8 ausführbaren Funktionen umfassende erweiternde Konfigurationspaket 12 umfasst eine durch das Planungssystem 1 freizugebende Editierfunktion, welche das Editieren von einem oder mehreren Prozessschritten eines auszuführenden Arbeitsprozesses mittels der Benutzerschnittstelle 2 ermöglicht. Dies ermöglicht es dem Nutzer, einzelne Prozessschritte zu modifizieren, indem durch die Grundkonfiguration 6 vorgegebene Betriebsparameter, Abläufe und dergleichen durch den Nutzer bei Bedarf individuell anpassbar sind. Beispielsweise ermöglicht es die Editierfunktion dem Nutzer, eine vom Planungssystem 1 bereitgestellte, automatisch generierte Fahrtroute zu modifizieren, wenn dem Nutzer feldspezifische Besonderheiten bekannt sind, die dem Planungssystem 1 im Zeitpunkt der Generierung der Fahrtroute nicht vorlagen. Dies kann beispielsweise eine witterungsbedingt nicht befahrbare Teilfläche des Feldes 17 sein.

Die freizugebende Editierfunktion kann auf die zumindest eine die Grundkonfiguration 6 erweiternde Einzelfunktion 10 und/oder das zumindest eine die Grundkonfiguration 6 erweiternde Konfigurationspaket 11, 12 beschränkt sein. Die hierfür erforderlichen Berechtigungen und Restriktionen können in der Rechtevergabedatenbank 16 hinterlegt sein.

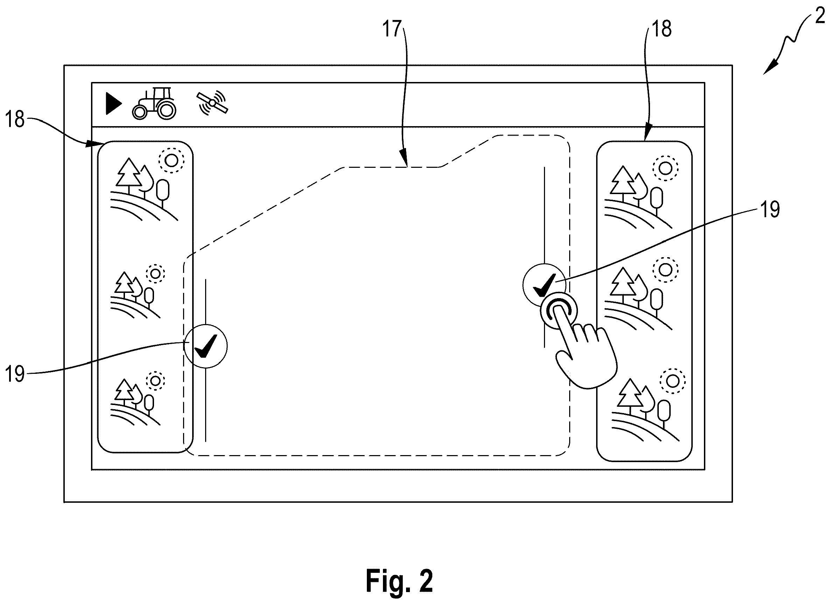

Eine vorteilhafte Weiterbildung sieht vor, dass das zumindest eine die Grundkonfiguration 6 erweiternde Konfigurationspaket 11, 12 eine Routine zur Ansteuerung des Planungssystems 1 umfasst, um für die zumindest eine autonome Arbeitsmaschine 7 im Bereich der Fahrtroute eine Position für zumindest einen Servicepunkt 19 automatisch vorzubestimmen. In Fig. 2 ist schematisch und exemplarisch eine Darstellung einer von der Benutzerschnittstelle 2 visualisierten Anzeige zur Auswahl eines Servicepunktes 19 gezeigt.

Das Planungssystem 1 ist dazu eingerichtet, auf Basis von in einer Speichereinheit 5 des Planungssystems 1 hinterlegten oder hinterlegbaren topographischen Daten Bereiche auf dem Feld 17 und/oder an das Feld 17 angrenzende Bereiche 18 zu identifizieren, die für das Vorsehen des zumindest einen Servicepunktes 19 zugänglich sind, wie in Fig. 2 exemplarisch dargestellt. Der Nutzer kann dabei in der Grundkonfiguration 6 zumindest einen der als geeignet erachteten vorgeschlagenen Servicepunkte auswählen. In Verbdingung mit der zusätzlichen Nutzung zumindest einer der Einzelfunktionen 10 und/oder eines der erweiternden Konfigurationspakete 11, 12 kann die optionale Editierfunktion auch die manuelle Veränderung der vorgeschlagenen Position des oder der Servicepunkte durch den Nutzer umfassen.

### Bezugszeichenliste

- 1: Planungssystem
- 2: Benutzerschnittstelle
- 3: Kommunikationseinheit
- 4: Recheneinheit
- 5: Speichereinheit
- 6: Grundkonfiguration
- 7: Autonome Arbeitsmaschine
- 8: Anbaugerät
- 9: Datenbank
- 10: Einzelfunktion
- 11: Konfigurationspaket
- 11a: Konfigurationspaket
- 12: Konfigurationspaket
- 13: Netzwerk
- 14: Webseite
- 15: Externe Datenquelle
- 16: Rechtevergabedatenbank
- 17: Feld
- 18: Bereich
- 19: Servicepunkt
- 20: Steuereinheit
- tₐ:
- tₘ:
- t_{N}:

## Patentansprüche

1. Anordnung zur Einstellung von Betriebsparametern einer autonomen Arbeitsmaschine (7), umfassend:
eine Benutzerschnittstelle (2), die mit einem entfernten Planungssystem (1) zum Datenaustausch verbunden oder verbindbar ist, welches eine Grundkonfiguration (6) mit für den Einsatz der autonomen Arbeitsmaschine (7) erforderlichen Betriebsparametern bereitstellt und übermittelt,
eine der autonomen Arbeitsmaschine (7) zugeordnete Steuereinheit (20), welche die von dem Planungssystem (1) bereitgestellten Betriebsparameter der Grundkonfiguration (6) zur Ansteuerung der autonomen Arbeitsmaschine (7) und/oder zumindest eines daran adaptierten Anbaugerätes (8) verwendet,
wobei durch die Benutzerschnittstelle (2) zumindest eine die Grundkonfiguration (6) erweiternde Einzelfunktion (10) und/oder zumindest ein die Grundkonfiguration (6) erweiterndes Konfigurationspaket (11, 12) von dem Planungssystem (1) abrufbar ist bzw. sind,
wobei eine Nutzungsdauer (t_{N}) der zumindest einen die Grundkonfiguration (6) erweiternden Einzelfunktion (10) und/oder des zumindest einen erweiternden Konfigurationspaketes (11, 12) durch eine vom Planungssystem (1) vorgegebene Zeitdauer (tₐ) zeitlich begrenzt ist und/oder durch eine mittels der Benutzerschnittstelle (2) spezifizierbare Zeitdauer (tₘ) begrenzbar ist.

2. Anordnung nach Anspruch 1, **dadurch gekennzeichnet, dass** das Planungssystem (1) dazu eingerichtet ist, in Abhängigkeit von einer Analyse sensorisch erfasster, durch die autonome Arbeitsmaschine (7) übermittelter Betriebsdaten und/oder von einer externen Datenquelle (15) abgerufener Umweltdaten und/oder abgerufener historischen Feld- und Ertragsdaten, die in einer Datenbank (9) des Planungssystems (1) hinterlegt sind, eine Empfehlung für zumindest eine die Grundkonfiguration (6) erweiternde Einzelfunktion (10) oder zumindest ein erweiterndes Konfigurationspaket (11, 12) an die Benutzerschnittstelle (2) zur Auswahl durch einen Nutzer zu übertragen.

3. Anordnung nach Anspruch 1 oder 2, **dadurch gekennzeichnet, dass** zumindest eines der die Grundfunktion (6) erweiternden Konfigurationspakete (11) eine Teilmenge aller von der autonomen Arbeitsmaschine (7) und/oder dem daran adaptierten Anbaugerät (8) ausführbaren Funktionen umfasst, die der Grundkonfiguration (6) hinzufügbar sind, und dass zumindest eines der Konfigurationspakete (12) alle von der autonomen Arbeitsmaschine (7) und/oder dem daran adaptierten Anbaugerät (8) ausführbaren Funktionen umfasst.

4. Anordnung nach einem der Ansprüche 1 bis 3, **dadurch gekennzeichnet, dass** eine der Einzelfunktionen (10) die Bereitstellung und Übertragung einer Applikationskarte, das automatische Generieren von Geofence- Datensätzen des zu bearbeitenden Feldes, das automatische Generieren von Fahrtrouten, das Bereitstellen von Korrektursignalen eines Positionsortungssystems, das Bereitstellen von spezifischen Betriebsparametern für den Einsatz breiter Anbaugeräte (8), die Freischaltung von Antriebsleistung der autonomen Arbeitsmaschine (7) durch eine Anpassung der Antriebssteuerungssoftware, das manuelle Auslösen des Anfahrens eines Servicepunktes (19) umfasst.

5. Anordnung nach einem der Ansprüche 1 bis 4, **dadurch gekennzeichnet, dass** das zumindest eine die Grundkonfiguration (6) erweiternde Konfigurationspaket (11, 12) mehrere Einzelfunktionen (10) bündelt.

6. Anordnung nach Anspruch 5, **dadurch gekennzeichnet, dass** mittels der Benutzerschnittstelle (2) zumindest zwei Einzelfunktionen (10) aus einer vorgegebenen Auswahl von Einzelfunktionen (10) zu dem zumindest einen die Grundkonfiguration (6) erweiternden Konfigurationspaket (11, 12) kombinierbar sind.

7. Anordnung nach einem der Ansprüche 1 bis 6, **dadurch gekennzeichnet, dass** das zumindest eine die Grundkonfiguration (6) erweiternde Konfigurationspaket (11, 12) die Optimierung von zumindest einer der in dem erweiternden Konfigurationspaket (11, 12) enthaltenen Einzelfunktionen und zugehörigen Betriebsparametern basierend auf historischen Planungsdaten und/oder aktuell von der autonomen Arbeitsmaschine (7) sensorisch erfassten Betriebs- und/oder Umgebungsdaten durch das Planungssystem (1) umfasst.

8. Anordnung nach einem der Ansprüche 1 bis 7, **dadurch gekennzeichnet, dass** die zumindest eine die Grundkonfiguration (6) erweiternde Einzelfunktion (10) und/oder das zumindest eine die Grundkonfiguration (6) erweiternde Konfigurationspaket (11, 12), die durch die Benutzerschnittstelle (2) abrufbar sind, im laufenden Betrieb der autonomen Arbeitsmaschine (2) abrufbar sind.

9. Anordnung nach einem der Ansprüche 1 bis 8, **dadurch gekennzeichnet, dass** das Planungssystem (1) mit einer Rechtevergabedatenbank (16) verbunden ist, aus welcher Berechtigungsinformationen abrufbar sind.

10. Anordnung nach einem der Ansprüche 3 bis 9, **dadurch gekennzeichnet, dass** das alle von der autonomen Arbeitsmaschine (7) und/oder dem daran adaptierten Anbaugerät (8) ausführbaren Funktionen umfassende erweiternde Konfigurationspaket (12) eine durch das Planungssystem (1) freizugebende Editierfunktion umfasst, welche das Editieren von einem oder mehreren Prozessschritten eines auszuführenden Arbeitsprozesses mittels der Benutzerschnittstelle (2) ermöglicht.

11. Anordnung nach Anspruch 10, **dadurch gekennzeichnet, dass** das Planungssystem (1) mit der Rechtevergabedatenbank (16) verbunden ist, aus welcher Berechtigungsinformationen abrufbar sind, welchen Umfang die freizugebende Editierfunktion hat.

12. Anordnung nach Anspruch 10 oder 11, **dadurch gekennzeichnet, dass** die freizugebende Editierfunktion auf die zumindest eine die Grundkonfiguration (6) erweiternde Einzelfunktion (10) und/oder das zumindest eine die Grundkonfiguration (6) erweiternde Konfigurationspaket (11, 12) beschränkt ist.

13. Anordnung nach einem der Ansprüche 1 bis 12, **dadurch gekennzeichnet, dass** das zumindest eine die Grundkonfiguration (6) erweiternde Konfigurationspaket (11, 12) eine Routine zur Ansteuerung des Planungssystems (1) umfasst, um für die zumindest eine autonome Arbeitsmaschine (7) im Bereich (18) der Fahrtroute eine Position für den zumindest einen Servicepunkt (19) automatisch vorzubestimmen, wobei das Planungssystem (1) dazu eingerichtet ist, auf Basis von in einer Speichereinheit (5) des Planungssystems (1) hinterlegten oder hinterlegbaren topographischen Daten Bereiche (18) des Feldes (17) und/oder an das Feld (17) angrenzende Bereiche (18) zu identifizieren, die für das Vorsehen des zumindest einen Servicepunktes (19) zugänglich sind.

14. Verfahren zur Einstellung von Betriebsparametern einer autonomen Arbeitsmaschine (7), umfassend die Verfahrensschritte:
- Verbinden einer Benutzerschnittstelle (2) mit einem entfernten Planungssystem (1) zum Datenaustausch,
- Bereitstellen einer Grundkonfiguration (6) mit für den Einsatz der autonomen Arbeitsmaschine (7) erforderlichen Betriebsparametern durch das Planungssystem (1) und Übermitteln der Grundkonfiguration (6) an eine der autonomen Arbeitsmaschine (7) zugeordnete Steuereinheit (20),
- Verwenden der von dem Planungssystem (1) bereitgestellten Betriebsparameter der Grundkonfiguration (6) durch die Steuereinheit (20) zur Ansteuerung der autonomen Arbeitsmaschine (7) und/oder zumindest eines daran adaptierten Anbaugerätes (8),
- Bereitstellen zumindest einer die Grundkonfiguration (6) erweiternde Einzelfunktion (10) und/oder zumindest eines die Grundkonfiguration (6) erweiternden Konfigurationspaketes (11, 12) durch das Planungssystem (1), welche oder welches durch die Benutzerschnittstelle (2) abrufbar ist bzw. sind,
- Begrenzen einer zeitlichen Nutzungsdauer (t_{N}) der zumindest einen die Grundkonfiguration (6) erweiternden Einzelfunktion (10) und/oder des zumindest einen erweiternden Konfigurationspaketes (11, 12) durch eine vom Planungssystem (1) vorgegebene Zeitdauer (tₐ) und/oder durch eine mittels der Benutzerschnittstelle (2) spezifizierbare Nutzungsdauer (tₘ).
